# EUROPÄISCHE PATENTANMELDUNG

(11) **EP 1 433 520 A1**
(43) Veröffentlichungstag der Anmeldung: **30.06.2004**
(21) Anmeldenummer: 03028397.2
(22) Anmeldetag: 11.12.2003
(51) Int. Cl.: B01D 61/50, C02F 1/469

(54) **Elektrodialysevorrichtung**

(30) Priorität: 27.12.2002 DE 10261275
(71) Anmelder: EISENMANN MASCHINENBAU KG (Komplementär: EISENMANN-Stiftung), 71032 Böblingen (DE)
(72) Erfinder: Katefidis, Apostolos, 71116 Gärtringen (DE)
(74) Vertreter: Ostertag, Ulrich, Dr.

(57) **Zusammenfassung**

Eine Elektrodialysevorrichtung 10, die insbesondere zur Einstellung des pH-Wertes der Lackflüssigkeit in einer kataphoretischen Tauchlackieranlage eingesetzt wird, umfasst eine Vielzahl zueinander parallel geschalteter Elektrodialysezellen (16, 17), die in bekannter Weise jeweils zwei durch eine ionenspezifische Membran (34) voneinander getrennte Kammern (14) aufweisen. Die einzelnen Elektrodialysezellen (16, 17) sind untereinander analog aufgebaut und in einem Stapel angeordnet. Sie sind jeweils aus aneinander angeordneten plattenförmigen Elementen (20a, 20b, 22a, 22b, 34) zusammengesetzt. Plattenförmige Elemente (20a, 20b) einer ersten Art bilden Elektroden, während plattenförmige Elemente (22a, 22b) einer zweiten Art Distanzelemente bilden, die eine Aussparung im Innenbereich aufweisen und so eine Kammer (14) seitlich begrenzen. Innerhalb jeder Elektrodialysezelle (16, 17) ist eine Folge gebildet, die aus einem plattenförmigen Element (20a) der ersten Art und zwei plattenförmigen Elementen (22a, 22b) der zweiten Art mit einer dazwischen angeordneten ionenspezifischen Membran (34) besteht. Diese Elektrodialysevorrichtung 10 läßt sich aus sehr wenigen unterschiedlichen Teilen kostengünstig montieren und ist in ihrer Kapazität durch die Wahl der Anzahl der im Stapel befindlichen Elektrodialysezellen (16, 17) leicht veränderbar.

## Beschreibung

Die Erfindung betrifft eine Elektrodialysevorrichtung mit
a) einer Vielzahl zueinander parallel geschalteter Elektrodialysezellen, die
   aa) jeweils zwei durch eine ionenspezifische Membran voneinander getrennte Kammern aufweisen,
      wobei
   ab) eine der Kammern von einer Vorlaufflüssigkeit durchströmbar ist, der in der Kammer Ionen entzogen werden und welche die Kammer als Filtrat verlässt;
   ac) die andere Kammer von einer Austauschflüssigkeit zur Aufnahme der der Vorlaufflüssigkeit entzogenen Ionen durchströmbar ist,
   ad) in einer der beiden Kammern eine Anode und der anderen der beiden Kammern eine Kathode angeordnet ist.

Elektrodialyseeinrichtungen sind in unterschiedlichsten Anwendungsgebieten bekannt. Sie finden sich z. B. auch im Bereich der Lackiertechnik, insbesondere im Bereich der kataphoretischen Tauchlackierung, wo Elektrodialysevorrichtungen zur Einstellung des Säuregehaltes der Lackflüssigkeit benutzt werden. Im allgemeinen werden dabei mehrere Elektrodialysezellen eingesetzt, die aus Kapazitätsgründen parallel geschaltet werden.

Die Herstellung der bekannten Dialysezellen ist relativ aufwendig: In einem Behälter musste die erforderliche Membran fixiert werden, um die beiden Kammern der Dialysezelle voneinander zu trennen. Darüber hinaus mussten die Elektroden in geeigneter Form eingebracht und ein gleichmäßiger Durchfluß sowohl der Vorlaufflüssigkeit, die nach der Abreicherung die Dialysezelle als Filtrat verlässt, als auch der Austauschflüssigkeit, welche die der Vorlaufflüssigkeit entzogenen Ionen aufnimmt, musste gewährleistet sein. Die Parallelschaltung der Dialysezellen wurde durch externe Schläuche vorgenommen, was ebenfalls aufwendig und platzverbrauchend ist.

Aufgabe der vorliegenden Erfindung ist es, eine Elektrodialysevorrichtung der eingangs genannten Art so auszugestalten, daß die Anzahl der zu verwendenden Bauelemente weitgehend reduziert und eine kompakte und platzsparende Ausbildung der Elektrodialysevorrichtung erzielbar ist.

Diese Aufgabe wird erfindungsgemäß dadurch gelöst, daß
b) die Elektrodialysevorrichtung aus einem Stapel analog aufgebauter Elektrodialysezellen aufgebaut ist,
c) die Elektrodialysezellen aus aneinander angeordneten plattenförmigen Elementen zusammengesetzt sind, wobei
   ca) plattenförmige Elemente einer ersten Art Elektroden bilden,
   cb) plattenförmige Elemente einer zweiten Art Distanz elemente bilden, die eine Aussparung im Innenbereich aufweisen und so eine Kammer seitlich begrenzen,
   cc) eine Folge von einem plattenförmigen Element erster Art und zwei plattenförmigen Elementen der zweiten Art mit einer dazwischen angeordneten ionenspezifischen Membran gebildet ist.

Durch die Ausbildung der Elektrodialysezellen aus im wesentlichen nur zwei Arten plattenförmiger Elemente (zuzüglich der Membranen) wird die Anzahl der voneinander verschiedenen Bauteile erheblich reduziert. Der Gesamtaufbau wird durch das unmittelbare Aneinanderreihen der einzelnen plattenförmigen Elemente sowie der von diesen gebildeten Elektrodialysezellen ebenfalls deutlich vereinfacht. Die Montage dieser Elektrodialysezellen und der hieraus aufgebauten Elektrodialysevorrichtungen wird insgesamt kostengünstig. Die erfindungsgemäße Elektrodialysevorrichtung läßt sich praktisch in beliebigen Kapazitäten herstellen, indem die entsprechende Anzahl einzelner Elektrodialysezellen hintereinander aufgereiht wird.

Bevorzugt wird, wenn die Elektrodialysezellen durch ein zweites plattenförmiges Element der ersten Art abgeschlossen sind, wobei eines der beiden plattenförmigen Elemente eine Kathode und das andere plattenförmige Element eine Anode bildet. Die Elektroden der einzelnen Elektrodialysezellen begrenzen auf diese Weise deren Kammern zu einer Seite hin, ohne daß es einer zusätzlichen Wand bedürfte.

Diese Ausführungsform der Erfindung lässt sich besonders vorteilhaft dahingehend weiterbilden, daß zumindest ein Teil der Elektrodialysezellen derart abwechselnd in umgekehrter Reihenfolge angeordnet ist, daß die Elektroden jeweils zwei benachbarten Elektrödialysezellen zugeordnet sind. Erneut ergibt sich bei dieser Bauweise, bei der die Elektroden zwei benachbarten Elektrodialysezellen angehören, eine Reduktion der benötigten Bauteile; darüber hinaus erübrigt sich eine elektrische Isolation zwischen benachbarten Elektroden unterschiedlicher Elektrodialysezellen.

Der so gebildete Stapel von Elekrodialysezellen kann beidseits von Abschlußplatten begrenzt sein. Diese Abschlußplatten schützen die weiter innen liegenden Baukomponenten, beispielsweise die benachbarten Elektroden, und stellen ggfs. eine elektrische Isolierung nach außen dar.

An mindestens einer Abschlußplatte können darüber hinaus Anschlüsse zur Zufuhr von Vorlaufflüssigkeit und Austauschflüssigkeit sowie zur Abfuhr von Filtrat und angereicherter Austauschflüssigkeit ausgebildet sein. Auf diese Weise kann die Elektrodialysevorrichtung in einfacher Weise an die externen Flüssigkeitskreisläufe angeschlossen werden.

Insbesondere ist es möglich, daß eine der Abschlußplatten alle Anschlüsse aufweist. Alternativ ist es auch denkbar, daß eine Abschlußplatte die Anschlüsse für die Zufuhr von Austauschflüssigkeit und die Abfuhr von Filtrat und die andere Abschlußplatte die Anschlüsse für die Zufuhr von Vorlaufflüssigkeit und die Abfuhr von angereicherter Austauschflüssigkeit aufweist. Hierdurch wird eine Art Gegenstrom-Prinzip erreicht, bei dem die Durchflußrichtung der Austauschflüssigkeit derjenigen der Vorlaufflüssigkeit entgegengesetzt ist.

Es kann aber auch eine Abschlußplatte die Anschlüsse für die Zufuhr von Vorlaufflüssigkeit und Austauschflüssigkeit und die andere Abschlußplatte die Anschlüsse für die Abfuhr von Filtrat und angereicherter Austauschflüssigkeit aufweist. Bei dieser Ausgestaltung stimmen die Durchflußrichtungen von Vorlauf- und Austauschflüssigkeit durch die Elektrodialysevorrichtung überein.

Der Stapel von Elektrodialysezellen ist vorzugsweise über die beiden Abschlußplatten miteinander verbindende Befestigungselemente zusammengehalten. Dabei wird insbesondere über die Befestigungselemente eine Druckspannung auf die zwischen den Abschlußplatten liegenden Elemente erzeugt. Durch diese Maßnahme wird eine gute Anlage der einzelnen plattenförmigen Elemente aneinander und eine gute Wirkung der zwischenliegenden Dichtungen erzielt.

Die Befestigungselemente durchsetzen bevorzugt die plattenförmigen Elemente in einem Bereich außerhalb der Kammern, wozu die plattenförmigen Elemente fluchtend zueinander ausgerichtete Bohrungen aufweisen.

Bei einer Ausführungsform der Erfindung weisen die plattenförmigen Elemente der ersten Art, die also die Elektroden bilden, seitlich überstehende Stromanschlußfahnen auf.
Diese Stromanschlußfahnen dienen der leichten Kontaktierung der Elektroden. Insbesondere können in diesem Zusammenhang die Stromanschlußfahnen jeweils Bohrungen aufweisen, die von einem elektrischen Leiter durchsetzt werden, wobei über die Anlage des Leiters an der Stromanschlußfahne im Bereich der Bohrung ein elektrischer Kontakt zwischen dem Leiter und dem plattenförmigen Element hergestellt ist. Vorzugsweise sind die Elektroden gleicher Polarität über einen gemeinsamen elektrischen Leiter miteinander verbunden, der insbesondere stabförmig ausgebildet sein kann.

Um dies in einfacher Weise zu ermöglichen, können die Stromanschlußfahnen außermittig angeordnet und die plattenförmigen Elemente der ersten Art, also die Elektroden bildenden Elemente, die unterschiedliche Polarität aufweisen, spiegelsymmetrisch zueinander angeordnet sein.
Auf diese Weise lassen sich die zu derselben Polarität gehörenden Stromanschlußfahnen leicht durch einen geradlinigen Leiter miteinander verbinden. Als Elektroden unterschiedlicher Polarität lassen sich dieselben plattenförmigen Elemente einsetzen, die nur "auf Umschlag" eingesetzt zu werden brauchen.

Besonders bevorzugt ist diejenige Ausführungsform der Erfindung, bei welcher die plattenförmigen Elemente (einschließlich der Membran) in einem Bereich außerhalb der Kammern vier fluchtend aufeinander ausgerichtete Durchgangsbohrungen aufweisen, wobei bei plattenförmigen Elementen der zweiten Art, also den Distanzelementen, zwei der Durchgangsbohrungen über Stichkanäle mit der im Innenbereich ausgebildeten, die Kammer bildenden Aussparung verbunden sind. Die miteinander fluchtenden Durchgangsbohrungen der plattenförmigen Elemente bilden auf diese Weise Strömungskanäle, welche die Elektrodialysevorrichtung von einem bis zum anderen Ende durchsetzen, ohne daß externe Verbindungen, beispielsweise in Form von Schläuchen, erforderlich wären.

Dabei ist es besonders vorteilhaft, wenn die Durchgangsbohrungen wenigstens bezüglich einer Symmetrieebene der plattenförmigen Elemente symmetrisch angeordnet sind.
Auch diese plattenförmigen Elemente lassen sich so "auf Umschlag" in die gesamte Elektrodialysevorrichtung einbauen, was die Anzahl unterschiedlicher Teile reduziert.

Bevorzugt wird ferner, daß bei den plattenförmigen Elementen der zweiten Art, den Distanzelementen, zwei solche Durchgangsbohrungen über Stichkanäle mit der Aussparung verbunden sind, die nicht spiegelsymmetrisch zueinander angeordnet sind. Hierdurch wird erreicht, daß die Kammern die, von den Distanzelementen seitlich begrenzt werden, im wesentlichen diagonal durchströmt werden.

Die plattenförmigen Elemente der zweiten Art, die zu einem eine Anode bildenden plattenförmigen Element der ersten Art benachbart sind, sind vorzugsweise bezüglich einer Spiegelebene spiegelsymmetrisch zu den plattenförmigen Elementen der zweiten Art, die zu einem eine Kathode bildenden plattenförmigen Element der ersten Art benachbart sind, angeordnet. Durch die bloße Art der Orientierung der plattenförmigen Elemente der zweiten Art innerhalb des gesamten Stapels läßt sich also bestimmen, ob der von diesem plattenförmigen Element umgebene Innenraum der Durchströmung mit Vorlaufflüssigkeit oder der Durchströmung mit Austauschflüssigkeit dient.

Besonders bevorzugt wird dabei, daß in jeder Elektrodialysezelle
a) eine erste Durchgangsbohrung von Vorlaufflüssigkeit und eine zweite Durchgangsbohrung von Filtrat durchströmbar ist, wobei die beiden Durchgangsbohrungen bezüglich einer Spiegelebene nicht spiegelsymmetrisch angeordnet sind und ein erstes Paar von Durchgangsbohrungen bilden;
b) eine dritte Durchgangsbohrung von zugeführter Austauschflüssigkeit und eine vierte Durchgangsbohrung von abgeführter Austauschflüssigkeit durchströmbar ist, wobei die beiden Durchgangsbohrungen bezüglich der einen Spiegelebene nicht spiegelsymmetrisch angeordnet sind und ein zweites Paar von Durchgangsbohrungen bilden; und
c) die beiden Paare von Durchgangsbohrungen bezüglich der einen Spiegelebene spiegelsymmetrisch zu einander angeordnet sind.

Diese Ausführungsform der Erfindung vereinigt in sich in optimaler Weise die Vorteile der geringen Anzahl unterschiedlicher Bauelemente und der bevorzugten diagonalen Durchströmung der einzelnen von den plattenförmigen Elementen der zweiten Art (Distanzelementen) umgebenen Kammern.

Zwischen unmittelbar aufeinander folgend angeordneten plattenförmigen Elementen der ersten und der zweiten Art sollte eine Dichtung angeordnet sein. Diese Dichtung dient dazu, einen Austritt von Flüssigkeit aus dem Inneren der Kammern sowie aus dem Inneren der verschiedenen Kanäle zu verhindern, die durch die fluchtenden Durchgangsbohrungen in den einzelnen plattenförmigen Elementen gebildet werden. Ob auch zwischen den plattenförmigen Elementen der zweiten Art, also den Distanzelementen, und der Membran eine Dichtung angeordnet werden muß, hängt von der Art der Membran ab.

Ein Ausführungsbeispiel der Erfindung wird nachfolgend anhand der Zeichnung näher erläutert; es zeigen
- Figur 1: eine schematische seitliche Explosionsansicht einer erfindungsgemäßen Elektrodialysevorrichtung;
- Figur 2a: die Draufsicht auf eine Abschlußplatte der Elektrodialysevorrichtung von Figur 1;
- Figur 2b: die Seitenansicht der Abschlußplatte von Figur 2a im Schnitt;
- Figur 3: die Draufsicht auf die zweite Abschlußplatte der Elektrodialysevorrichtung von Figur 1;
- Figur 4: die Draufsicht auf eine Elektrodenplatte, wie sie in der Elektrodialysevorrichtung der Figur 1 verwendet wird;

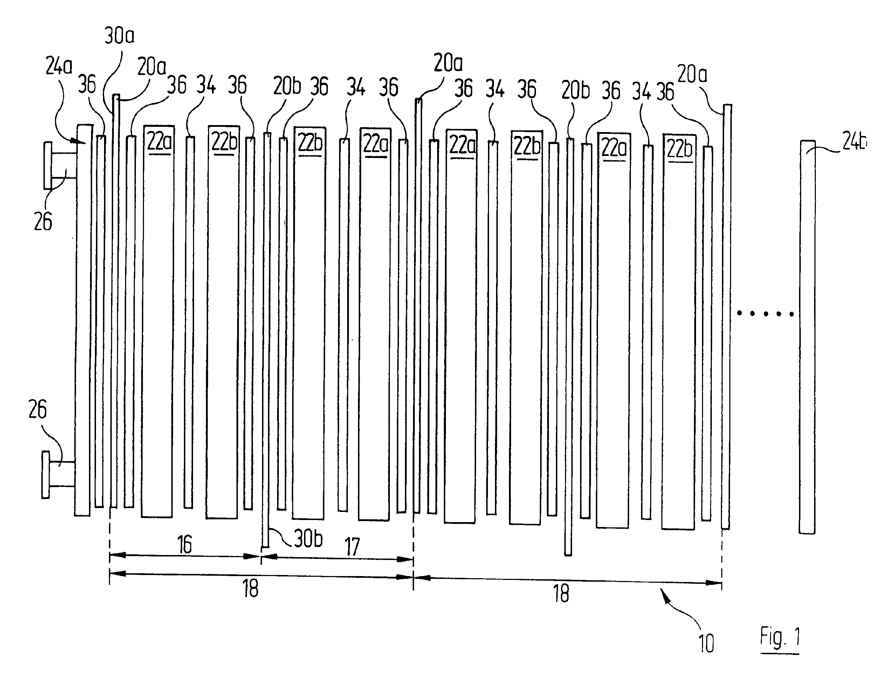

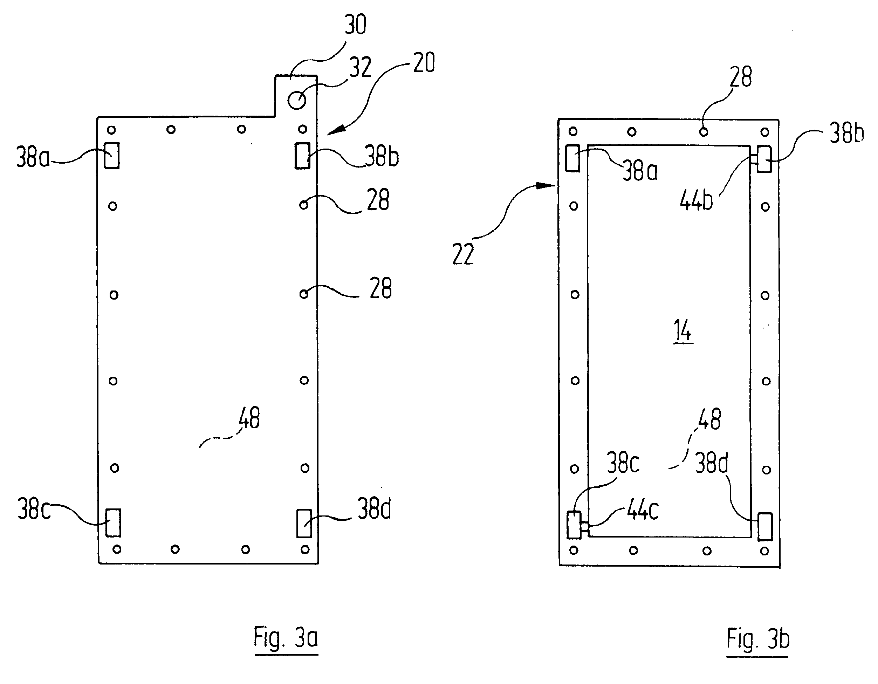

- Figur 3b: die Draufsicht auf ein Distanzelement der Elektrodialysevorrichtung von Figur 1;

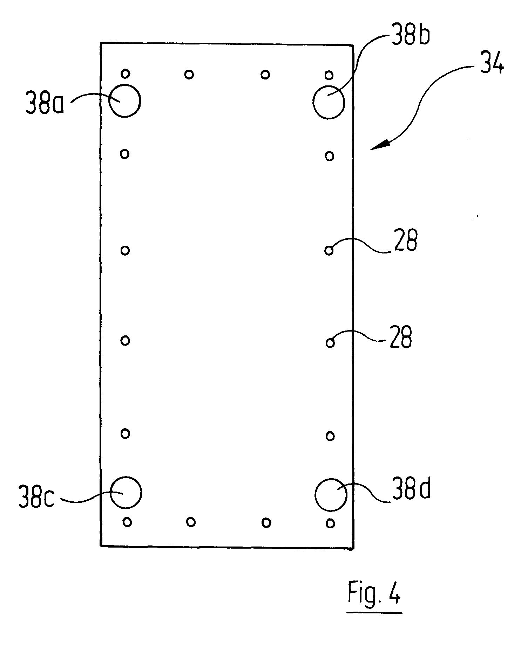

- Figur 4: die Draufsicht auf eine Membran der Elektrodialysevorrichtung von Figur 1.

Die in Figur 1 in schematischer, seitlicher Explosionsansicht dargestellte Elektrodialysevorrichtung 10 besteht ausschließlich aus einer Mehrzahl von ebenen plattenförmigen Elementen, die zwischen zwei seitlichen Abschlußplatten 24a, 24b nach Art eines Stapels angeordnet sind. Die gesamte Elektrodialysevorrichtung 10 läßt sich in Doppelzellen 18 unterteilen, die jeweils zwei Elektrodialysezellen 16, 17 umfassen. Die Figur 1 zeigt zwei derartige Doppelzellen 18, insgesamt also vier Dialysezellen 16, 17, die wie weiter unten deutlich wird, strömungsmäßig parallel geschaltet sind.

Jede Dialysezelle 16, 17 wird beidseits von jeweils einer plattenförmigen Elektrode 20a, 20b, begrenzt. Diese plattenförmigen Elektroden 20a, 20b werden hier auch "plattenförmige Elemente der ersten Art" genannt. Die Anordnung ist so, daß sich benachbarte innenliegende Elektrodialysezellen 17, die also nicht einer Abschlußplatte 24 unmittelbar benachbart sind, jeweils eine Elektrode 20a, 20b teilen. Die Dialysezellen 16, 17 umfassen außerdem zwei rahmenförmige Distanzelemente 22a, 22b, zwischen denen eine ionenspezifische Membran 34 angeordnet ist. Die Distanzelemente 22a, 22b werden hier auch "plattenförmige Elemente der zweiten Art" genannt. Zwischen den von der Membran 34 abgewandten Stirnseiten der Distanzelemente 22a, 22b und den diesen benachbarten Elektroden 20a, 20b ist jeweils eine Dichtung 36 eingefügt. Eine ähnliche Dichtung 36 liegt zwischen den äußeren Elektroden 20a der beiden äußeren Elektrodialysezellen 16 und den dieser benachbarten Abschlußplatten 24a, 24b.

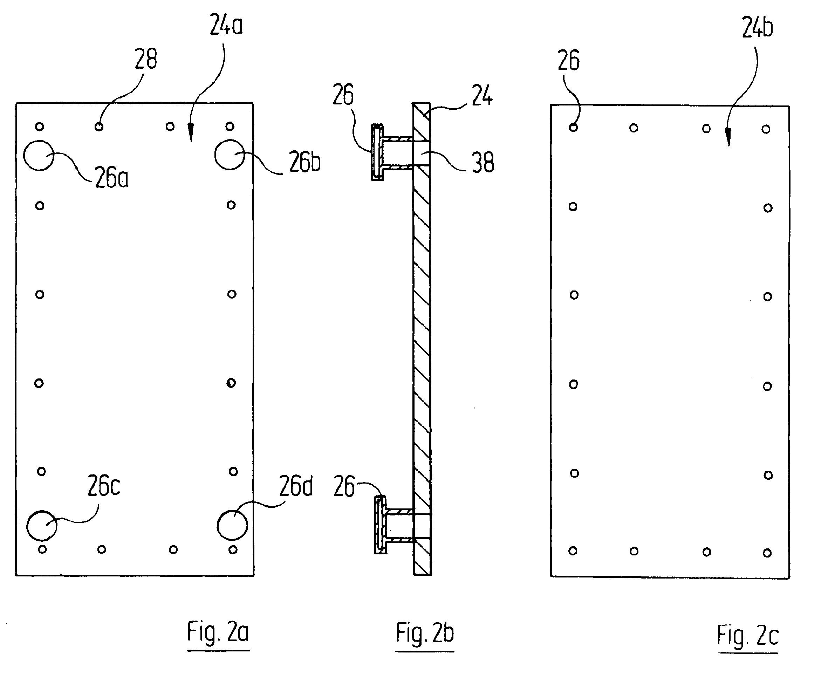

Figur 2a zeigt die Draufsicht auf die in Figur 1 linke Abschlußplatte 24a der Elektrodialysevorrichtung 10, über welche die Zu- bzw. Abfuhr der verschiedenen Flüssigkeiten erfolgt. Im Bereich der "Ecken" der rechteckigen Abschlußplatte 24a sind jeweils Anschlußstutzen 26a bis 26d vorgesehen, die mit entsprechenden Zufuhr- bzw. Abfuhrschläuchen oder Leitungen verbunden werden können. Der in der linken oberen Ecke in Figur 2a dargestellte Anschlußstutzen 26a dient der Abfuhr von Filtrat, also abgereicherter Vorlaufflüssigkeit. Der in derselben Höhe auf der gegenüberliegenden Seite der Abschlußplatte 24a vorgesehene Anschlußstutzen 26b dient der Abfuhr von Austauschflüssigkeit. Der in der linken unteren Ecke der Abschlußplatte 24a in Figur 2a dargestellte Anschlußstutzen 26c dient der Zufuhr von Austauschflüssigkeit, während schließlich der in der rechten unteren Ecke der Abschlußplatte 24a gezeigte Anschlußstutzen 26d der Zufuhr von Vorlaufflüssigkeit, also abzureichernder Flüssigkeit, dient. In welcher Weise die inneren Strömungswege der beiden Flüssigkeiten verlaufen, wird weiter unten deutlich werden.

Entlang der Ränder der Abschlußplatte 24a sind außerdem mehrere Durchgangsbohrungen 28 kleineren Durchmessers vorgesehen, welche, wie ebenfalls noch deutlich wird, der Verbindung der verschiedenen Elemente der Elektrodialysevorrichtung 10 mit Hilfe von Schrauben dienen.

Die in Figur 1 rechte Abschlußplatte 24b, deren Draufsicht in Figur 2c gezeigt ist, besitzt ausschließlich die kleinen Durchgangsbohrungen 28. Sie dient zum Verschließen der inneren Strömungswege an dem in Figur 1 rechten Ende der Elektrodialysevorrichtung 10, zum Zusammenhakten der gesamten Elektrodiaylysevorrichtung 10 und zum elektrischen Isolieren der benachbarten Anode 23.

Figur 3a zeigt die Draufsicht auf eine Elektrodenplatte 20. Diese besitzt die Grundform eines Rechteckes, wobei an die obere, schmale Rechteckseite eine ebenfalls rechteckige Anschlußfahne 30 angesetzt ist. Fluchtend zu den Anschlußstutzen 26a bis 26d der Anschlußplatte 24a verlaufen durch die Elektrodenplatte 20 vier im Querschnitt etwa rechteckige Durchgangsbohrungen 38a bis 38d. Außerdem sind in Figur 3a auch in der Elektrodenplatte 20 wieder die Durchgangsbohrungen 28 kleinen Durchmessers zu erkennen, die der wechselseitigen Verbindung der verschiedenen Elemente dienen.

Figur 3b zeigt die Draufsicht auf ein Distanzstück 22. Es hat die Gestalt eines rechteckigen Rahmens, dessen Außenabmessungen den Außenabmessungen der Grundplatten 24a und 24b und der Elektrodenplatten 20 (mit Ausnahme der Anschlußfahnen 30) entsprechen. Erneut finden sich fluchtend zu den Anschlußstutzen 26a bis 26d und fluchtend zu den Durchgangsbohrungen 38a bis 38d der Elektrodenplatte 20 vier Durchgangsbohrungen 38a bis 38d. Während die links oben und rechts unten in Figur 3b dargestellten Durchgangsbohrungen 38a und 38d in keiner Verbindung mit der von dem Rahmen des Distanzelements 22 umgebenen Aussparung stehen, sind die jeweils auf derselben Höhe gegenüberliegenden Durchgangsbohrungen 38b bzw. 38c über kurze Stichkanäle 44b bzw. 44c mit dieser Aussparung verbunden. Erneut finden sich in dem Distanzelement 22 die bereits mehrfach erwähnten Durchgangsbohrungen 28.

Figur 4 zeigt in Draufsicht eine Membran 34, deren Außenform der Rechteckform der Distanzelemente 22 sowie der Abschlußplatten 24a, 24b und (mit Ausnahme der Anschlußfahnen 30) der Elektrodenplatten 20 entspricht. Die Membran 34 umfasst vier Durchgangsbohrungen 38a bis 38d, die mit den Durchgangsbohrungen 38a bis 38d der Distanzelemente 22 und der Elektrodenplatten 20 sowie mit den Anschlußstutzen 26a bis 26d der Abschlußplatte 24a fluchten. Auch die Membran 34 ist mit den zur Verbindung der Elemente verwendeten Durchgangsbohrungen 28 kleinen Durchmessers versehen.

Die oben anhand der Figuren 2a bis 4 beschriebenen Bauelemente, die alle im wesentlichen ebene plattenförmige Elemente sind, werden zur Elektrodialysevorrichtung 10 in folgender Weise miteinander verbunden:

Neben der die Anschlußstutzen 26 tragenden Abschlußplatte 24a wird unter Zwischenschaltung einer Dichtung 36 eine erste Elektrode 20 angebracht und zwar so, daß die Anschlußfahne 30 nach oben steht. Diese Elektrode 20a wird in später zu beschreibender Weise als Anode geschaltet. An die Anode 20a wird unter Zwischenschaltung einer Dichtung 36 ein Distanzelement 22a angelegt und zwar in einer solchen Orientierung, daß die mit der inneren Aussparung des Distanzelementes 22a kommunizierende Durchgangsbohrung 38c mit dem Anschlußstutzen 26c und die ebenfalls mit der Aussparung kommunizierende Durchgangsbohrung 38b mit dem Anschlußstutzen 26b der Anschlußplatte 24a in Verbindung steht. Die Aussparung des Distanzelements 22a wird also von Austauschflüssigkeit diagonal durchströmt.

Auf das Distanzelement 22a folgt eine Membran 34 und auf diese wiederum ein zweites Distanzelement 22b. Dieses wird nunmehr aber in einer Weise eingesetzt, das zu der Einbauposition des ersten Distanzelementes 22a spiegelbildlich ist: Es wird dafür gesorgt, daß die Durchgangsbohrung 38b des Distanzelementes mit dem der Abfuhr des Filtrats dienenden Anschlußstutzen 26a und die Durchgangsbohrung 38c mit dem der Zufuhr der Vorlaufflüssigkeit dienenden Anschlußstutzen 26d der Abschlußplatte 24a in Verbindung steht. Die Aussparung des Distanzelements 22b wird also von Vorlaufflüssigkeit durchströmt, die das Distanzelement 22b als Filtrat verläßt.

Auf das zweite Distanzelement 22b folgt unter Zwischenschaltung einer weiteren Dichtung 36b eine zweite Elektrodenplatte 20b. Diese ist nunmehr so angeordnet, daß ihre Anschlußfahne 30b nach unten zeigt. Sie wird, wie später noch erläutert wird, als Kathode geschaltet.

Mit der Kathode 30b ist die erste Dialysezelle 16 vollständig. Es schließt sich nunmehr, in Figur 1 nach rechts, die zweite Dialysezelle 17 an. Diese teilt mit der ersten Dialysezelle 16 die Kathode 30b. Daher ist an die Kathode 30b unter Zwischenschaltung einer Dichtung 36 ein Distanzelement 22b angegliedert, welches sich in derselben Orientierung wie das Distanzelement 22b der ersten Dialysezelle 16 befindet. Dies bedeutet also, daß bei diesem Distanzelement 22b die über Stichkanäle 44b bzw. 44c mit dem Innenraum in Verbindung stehenden Durchgangsbohrungen 38b bzw. 38c mit den Anschlußstutzen 26a bzw. 26d der Abschlußplatte 24a in Verbindung stehen, also von Vorlaufflüssigkeit bzw. Filtrat durchströmt werden. Zwischen diesem ersten Distanzelement 22b der Dialysezelle 17 und dem zweiten Distanzelement 22a derselben Dialysezelle 17 ist wiederum eine Membran 34 angeordnet. Die Orientierung des Distanzelementes 22a der Dialysezelle 17 entspricht derjenigen des Distanzelementes 22a der Dialysezelle 16 ist also so, daß ihr Innenraum 14 mit dem Anschlußstutzen 26c zur Zufuhr und dem Anschlußstutzen 26b zur Abfuhr der Austauschflüssigkeit in Verbindung steht. Unter Zwischenschaltung einer weiteren Dichtung 36b folgt eine weitere Elektrodenplatte 20a, deren Anschlußfahne 30 nach oben gerichtet ist und die als Anode geschaltet ist. Mit dieser Anode 20a ist die zweite Dialysezelle 17 vervollständigt. Es beginnt nunmehr eine zweite, aus zwei Dialysezellen 16, 17 zusammengesetzte Doppelzelle 18, deren Bauweise der oben beschriebenen Bauweise der ersten Doppelzelle 18 entspricht.

An die letzte Elektrode 20a die Abfolge von Doppelzellen 18 wird in Figur 1 rechts die keine Anschlußstutzen aufweisende Abschlußplatte 24b angefügt. Der so erhaltene Stapel plattenförmiger Bauelemente wird nunmehr durch Anker oder Schrauben, welche durch die Durchgangsbohrungen 28 dieser verschiedenen Elemente hindurchgeführt sind, und auf deren mit Gewinde versehenen Enden Muttern aufgedreht sind, zusammengehalten.

Alle auf einer Seite aus dem Stapel der Bauelemente herausragenden Anschlußfahnen 30a, die zu Anoden 20a gehören, werden durch eine Leitung (nicht dargestellt) miteinander elektrisch verbunden, die durch die Durchgangsbohrung 32 der Anschlußfahnen 30 hindurchgeführt und mit dem Pluspol einer Gleichspannungsquelle verbunden ist. Entsprechend werden alle an der gegenüberliegenden Seite nach außen ragenden Anschlußfahnen 30b der als Kathoden geschalteten Elektrodenplatten 20b durch eine nicht dargestellte Leitung elektrisch miteinander verbunden, die durch die Durchgangsbohrungen 32 dieser Anschlußfahnen 30b hindurchgeführt und mit dem Minuspol der Gleichspannungsquelle verbunden ist.

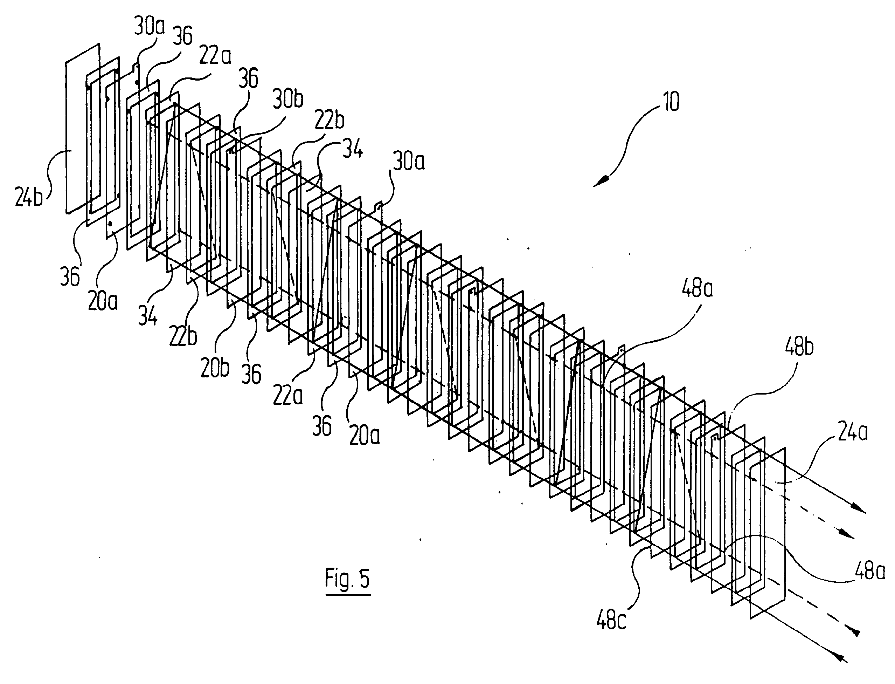

Die Strömungswege der verschiedenen Flüssigkeiten innerhalb der oben beschriebenen Elektrodialysevorrichtung 10 sind schematisch in Figur 5 dargestellt. Dieser ist zunächst zu entnehmen, daß durch die miteinander fluchtenden Durchgangsbohrungen 38a bis 38d in den Elektroden 20, in den Distanzelementen 22 und in den Membranen 34 Kanäle gebildet werden, die sich über die gesamte Länge der Elektrodialysevorrichtung 10 erstrecken, an dem Ende, welches der die Anschlußstutzen 26 aufweisenden Abschlußplatte 24a gegenüberliegt, durch die Abschlußplatte 24b verschlossen sind und die mit den Anschlußstutzen 26a bis 26d der Abschlußplatte 24a kommunizieren. Die entsprechenden Kanäle sind in Figur 4 mit den Bezugszeichen 48a bis 48d versehen. Über den mit dem Anschlußstutzen 26a in Verbindung stehenden Kanal 48a wird somit Filtrat abgezogen, über den mit dem Anschlußstutzen 26b in Verbindung stehenden Kanal 48b Austauschflüssigkeit abgeführt. Über den mit dem Anschlußstutzen 26c in Verbindung stehenden Kanal 48c wird Austauschflüssigkeit und über den mit dem Anschlußstutzen 26d in Verbindung stehenden Kanal 48d Vorlaufflüssigkeit zugeführt. Aufgrund der oben geschilderten Anordnung der verschiedenen plattenförmigen Elemente, insbesondere unter Berücksichtigung der jeweiligen Orientierung der Distanzelemente 22a 22b ergibt sich nunmehr folgender Strömungsverlauf:

Die über den Anschlußstutzen 26c zuströmende Austauschflüssigkeit gelangt über den Kanal 48c in die Innenräume all derjenigen Distanzelemente 22a, die einer als Anode geschalteten Elektrodenplatte 20a benachbart sind. Die Innenräume 14 dieser Distanzelemente 22a werden in diagonaler Richtung durchströmt. Die Austauschflüssigkeit tritt nach erfolgter Ionenaufnahme in den Kanal 48b ein und verlässt die Elektrodialysevorrichtung 10 über den Anschlußstutzen 26b.

Die Vorlaufflüssigkeit dagegen wird über den Anschlußstutzen 26d der Abschlußplatte 24a in den Kanal 48d eingebracht. Sie durchströmt die Innenräume 14 all derjenigen Distanzelemente 22b, die einer als Kathode geschalteten Elektrodenplatte 20b benachbart sind. Die an Ionen abgereicherte Vorlaufflüssigkeit wird sodann über den Kanal 48a und den Anschlußstutzen 26a aus der Elektrodialysevorrichtung 10 ausgeführt.

Wie aus der obigen Beschreibung zu erkennen ist, läßt sich die Kapazität der Elektrodialysevorrichtung 10 durch entsprechend häufiges Aneinanderreihen weniger Baukomponenten nach Belieben vergrößern. Alle flüssigkeitsführenden Strömungswege bilden sich innerhalb der Elektrodialysevorrichtung 10 selbst, ohne daß es hierzu irgendwelcher Schlauchverbindungen oder sonstiger Anschlüsse bedürfte.

## Patentansprüche

1. Elektrodialysevorrichtung, mit
a) einer Vielzahl zueinander parallel geschalteter Elektrodialysezellen, die
aa) jeweils zwei durch eine ionenspezifische Membran voneinander getrennte Kammern aufweisen,
wobei
ab) eine der Kammern von einer Vorlaufflüssigkeit durchströmbar ist, der in der Kammer Ionen entzogen werden und welche die Kammer als Filtrat verläßt,
ac) die andere Kammer von einer Austauschflüssigkeit zur Aufnahme der der Vorlaufflüssigkeit entzogenen Ionen durchströmbar ist,
ad) in einer der beiden Kammern eine Anode und in der anderen der beiden Kammern eine Kathode angeordnet ist,
**dadurch gekennzeichnet, daß**
b) die Elektrodialysevorrichtung (10) aus einem Stapel analog aufgebauter Elektrodialysezellen (16, 17) aufgebaut ist,
c) die Elektrodialysezellen (16, 17) aus aneinander angeordneten plattenförmigen Elementen (20a, 20b, 22a, 22b, 34) zusammengesetzt sind, wobei
ca) plattenförmige Elemente (20a, 20b) einer ersten Art Elektroden bilden,
cb) plattenförmige Elemente (22a, 22b) einer zweiten Art Distanzelemente bilden, die eine Aussparung im Innenbereich aufweisen und so eine Kammer (14) seitlich begrenzen,
cc) eine Folge von einem plattenförmigen Element (20a) erster Art und zwei plattenförmigen Elementen (22a, 22b) der zweiten Art mit einer dazwischen angeordneten ionenspezifischen Membran (34) gebildet ist.

2. Elektrodialysevorrichtung nach Anspruch 1, **dadurch gekennzeichnet, daß** die Elektrodialysezellen (16, 17) durch ein zweites plattenförmiges Element (20b) der ersten Art abgeschlossen sind, wobei eines der beiden plattenförmigen Elemente (20a) eine Kathode und das andere plattenförmige Element (20b) eine Anode bildet.

3. Elektrodialysevorrichtung nach Anspruch 2, **dadurch gekennzeichnet, daß** zumindest ein teil der Elektrodialysezellen (16, 17) derart abwechselnd in umgekehrter Reihenfolge angeordnet sind, daß die Elektroden (20a, 20b) jeweils zwei benachbarten Elektrodialysezellen (16, 17) zugeordnet sind.

4. Elektrodialysevorrichtung nach Anspruch 2 oder 3, **dadurch gekennzeichnet, daß** der Stapel von Elektrodialysezellen (12) beidseits von Abschlußplatten (24a, 24b) begrenzt ist.

5. Elektrodialysevorrichtung nach Anspruch 4, **dadurch gekennzeichnet, daß** die Abschlußplatten (24a, 24b) elektrisch isolierend sind.

6. Elektrodialysevorrichtung nach der Anspruch 4 oder 5, **dadurch gekennzeichnet, daß** an mindestens einer Abschlußplatte (24a) Anschlüsse (26) zur Zufuhr von Vorlaufflüssigkeit und Austauschflüssigkeit sowie zur Abfuhr von Filtrat und angereicherter Austauschflüssigkeit ausgebildet sind.

7. Elektrodialysevorrichtung nach Anspruch 6, **dadurch gekennzeichnet, daß** eine der Abschlußplatten (24a) alle Anschlüsse (26) aufweist.

8. Elektrodialysevorrichtung nach Anspruch 6, **dadurch gekennzeichnet, daß** eine Abschlußplatte die Anschlüsse für die Zufuhr von Austauschflüssigkeit und die Abfuhr von Filtrat und die andere Abschlußplatte die Anschlüsse für die Zufuhr von Vorlaufflüssigkeit und die Abfuhr von angereicherter Austauschflüssigkeit aufweist.

9. Elektrodialysevorrichtung nach Anspruch 6, **dadurch gekennzeichnet, daß** eine Abschlußplatte die Anschlüsse für die Zufuhr von Vorlaufflüssigkeit und Austauschflüssigkeit und die andere Abschlußplatte die Anschlüsse für die Abfuhr von Filtrat und angereicherter Austauschflüssigkeit aufweist.

10. Elektrodialysevorrichtung nach einem der vorhergehenden Ansprüche, **dadurch gekennzeichnet, daß** der Stapel von Elektrodialysezellen (16, 17) über die beiden Abschlußplatten (24a, 24b) miteinander verbindende Befestigungselemente zusammengehalten ist.

11. Elektrodialysevorrichtung nach Anspruch 10, **dadurch gekennzeichnet, daß** die Befestigungselemente eine Druckspannung auf die zwischen den Abschlußplatten (24a, 24b) liegenden Elemente erzeugen.

12. Elektrodialysevorrichtung nach Anspruch 10 oder 11, **dadurch gekennzeichnet, daß** die Befestigungselemente die plattenförmigen Elemente (20a, 20b, 22a, 22b, 34) in einem Bereich außerhalb der Kammern (14) durchsetzen, wozu die plattenförmigen Elemente (20a, 20b, 22a, 22b, 34) fluchtend zueinander ausgerichtete Bohrungen (28) aufweisen.

13. Elektrodialysevorrichtung nach einem der vorhergehenden Ansprüche, **dadurch gekennzeichnet, daß** die plattenförmigen Elemente (20a, 20b) der ersten Art seitlich überstehende Stromanschlußfahnen (30a, 30b) aufweisen.

14. Elektrodialysevorrichtung nach Anspruch 13, **dadurch gekennzeichnet, daß** die Stromanschlußfahnen (30a, 30b) jeweils Bohrungen (32) aufweisen, die von einem elektrischen Leiter durchsetzt werden, wobei über die Anlage des Leiters an der Stromanschlußfahne (30) im Bereich der Bohrung (32) ein elektrischer Kontakt zwischen dem Leiter und dem plattenförmigen Element (20a, 20b) hergestellt ist.

15. Elektrodialysevorrichtung nach Anspruch 13 oder 14, **dadurch gekennzeichnet, daß** die Elektroden gleicher Polarität mit einem gemeinsamen elektrischen Leiter verbunden sind, der insbesondere stabförmig ausgebildet ist.

16. Elektrodialysevorrichtung nach Anspruch 15, **dadurch gekennzeichnet, daß** der stabförmig ausgebildete elektrische Leiter Teil eines die Abschlußplatten (24a, 24b) untereinander verbindenden Befestigungselements ist.

17. Elektrodialysevorrichtung nach einem der vorhergehenden Ansprüche, **dadurch gekennzeichnet, daß** die plattenförmigen Elemente der ersten Art (20a, 20b) unterschiedlicher Polarität spiegelsymmetrisch zueinander angeordnet sind.

18. Elektrodialysevorrichtung nach einem der vorhergehenden Ansprüche, **dadurch gekennzeichnet, daß** die plattenförmigen Elemente (20a, 20b, 22a, 22b, 34) in einem Bereich außerhalb der Kammern (14) vier fluchtend aufeinander ausgerichtete Durchgangsbohrungen (38a, 38b, 38c, 38d) aufweisen, wobei bei plattenförmigen Elementen (22a, 22b) der zweiten Art zwei der Durchgangsbohrungen (38b, 38c) mittels Stichkanälen (44a, 44b) mit der im Innenbereich ausgebildeten, die Kammer (14) bildenden Aussparung verbunden sind.

19. Elektrodialysevorrichtung nach Anspruch 18, **dadurch gekennzeichnet, daß** die Durchgansgbohrungen (38) wenigstens bezüglich einer Symmetrieebene der plattenförmigen Elemente (20a, 20b, 22a, 22b, 34) symmetrisch angeordnet sind.

20. Elektrodialysevorrichtung nach Anspruch 19, **dadurch gekennzeichnet, daß** bei den plattenförmigen Elementen der zweiten Art (22a, 22b) zwei solche Durchgangsbohrungen (38b, 38c) mittels Stichkanälen (44a, 44b) mit der Aussparung verbunden sind, die nicht spiegelsymmetrisch zueinander angeordnet sind.

21. Elektrodialysevorrichtung nach Anspruch 19, **dadurch gekennzeichnet, daß** die plattenförmigen Elemente der zweiten Art (22b), die zu einem eine Anode bildenden plattenförmigen Element der ersten Art (20b) benachbart sind, bezüglich einer Spiegelebene (48) spiegelsymmetrisch zu den plattenförmigen Elementen der zweiten Art (22a), die zu einem eine Kathode bildenden plattenförmigen Element der ersten Art (20a) benachbart sind, angeordnet sind.

22. Elektrodialysevorrichtung nach Anspruch 21, **dadurch gekennzeichnet, daß** in jeder Elektrodialysezelle (16, 17)
a) eine erste Durchgangsbohrung von Vorlaufflüssigkeit und eine zweite Durchgangsbohrung von Filtrat durchströmbar ist, wobei die beiden Durchgangsbohrungen bezüglich einer Spiegelebene nicht spiegelsymmetrisch angeordnet sind und ein erstes Paar von Durchgangsbohrungen bilden;
b) eine dritte Durchgangsbohrung von zugeführter Austauschflüssigkeit und eine vierte Durchgangsbohrung von abgeführter Austauschflüssigkeit durchströmbar ist, wobei die beiden Durchgangsbohrungen bezüglich der einen Spiegelebene nicht spiegelsymmetrisch angeordnet sind und ein zweites Paar von Durchgangsbohrungen bilden; und
c) die beiden Paare von Durchgangsbohrungen bezüglich der einen Spiegelebene spiegelsymmetrisch zueinander angeordnet sind.

23. Elektrodialysevorrichtung nach einem der vorhergehenden Ansprüche, **dadurch gekennzeichnet, daß** zwischen unmittelbar aufeinander folgend angeordneten plattenförmigen Elementen (20a, 20b, 22a, 22b) der ersten und der zweiten Art eine Dichtung (36) angeordnet ist.
